# EUROPEAN PATENT SPECIFICATION

(11) **EP 2 181 947 B1**
(45) Date of publication and mention of the grant of the patent: **11.12.2013**
(21) Application number: 09174464.9
(22) Date of filing: 29.10.2009
(51) Int. Cl.: B65G 23/06, F16H 55/30, F16H 55/48

(54) **Replaceable multi part sprocket wheel**
Ersetzbares, mehrteiliges Kettenrad
Roue de pignon à pièces multiples remplaçable

(30) Priority: 29.10.2008 DK 200801488
(43) Date of publication of application: 05.05.2010
(73) Proprietor: Ammeraal Beltech Modular A/S, 7100 Vejle (DK)
(72) Inventor: Westergaard Andersen, Kenneth, 7100, Vejle (DK); Hansen, Michael T., 7100, Vejle (DK)
(74) Representative: Tellefsen, Jens J.

(56) References cited:
- FR-A1- 2 370 203
- US-A- 6 086 495

## Description

### Replaceable Multi Part Sprocket Wheel

This invention relates to a multi part sprocket wheel wherein the sprocket wheel is made of two or more parts, according to the preamble of claim 1.

Such sprocket wheels are commonly used in conveyor structures where endless conveyor belts are propelled by engagement with sprocket wheels.

### Background of the invention

In the art it is common to arrange sprocket wheels on a drive shaft, such that by rotating the drive shaft the sprocket wheels will rotate. Typically the sprocket wheels are provided with teeth along the wheels periphery. The teeth will engage an endless conveyor belt, arranged around a part of the sprocket wheel, such that when the drive shaft rotates, the teeth will propel the endless belt in one direction or the other.

A problem in the art is the wear and tear and eventual failure of the sprocket wheels. Typically the sprocket wheels will be made from a similar material as the endless belt - often plastics. When the sprocket wheel fails for one reason or the other, the conveyor structure and belt has to be stopped and dismantled to a certain degree. This is both costly both with respect to man-hours but especially with respect to loss of production time (downtime of the installation).

It has therefore been suggested in the art to provide sprocket wheels which may be replaced without dismantling the entire installation.

One such example of a two piece sprocket wheel for a modular link belt assembly is known from US 5 279 526. This patent describes how two semicircular parts can be joined to comprise a uniform sprocket wheel. The joining sectors have interleaving flanges of reduced thickness, which overlap in interleaving flanges to form a joint. When mated about the shaft, the parts are bound in place to form a unitary sprocket wheel by fasteners. These fasteners may be screws or bolts ex-screws or bolts extending through the sprocket wheel flanges at an overlap region near the rim of the sprocket wheel for axial access for removal.

The need of bolts and tools for mating the sprocket wheel parts is a great inconvenience, when a sprocket wheel needs to be replaced. It is very uneconomical that it is necessary to shut down the entire production, to be able to separate the modular link belt in order to repair or replace a sprocket wheel. It is further a disadvantage that tools and bolts are needed, while the space around the sprocket wheel and the modular link belt assembly is very narrow, and it is therefore difficult working with tools and bolts in the narrow space.

A further example is known from FR 76 33241 which describes a two part wheel, but contrary to US 5 279 526, this invention is based on joining two disc type circular wheel parts. By combining a sprocket wheel this way, the sprocket wheel will have a groove in the periphery rim, made to fit a V-belt. That's the overriding object of the invention disclosed in FR7633241, in order to provide a more economical manner of manufacture.

The two parts has one or more tabs and one or more apertures made to fit exactly into each other, as when the two parts are joined the tab and apertures lock the two parts together to form at uniform wheel.

This sprocket wheel is difficult to replace, while it is necessary to stop the entire modular link belt assembly, as the axle must be detached to remove and replace a new sprocket wheel. Although the wheel comprises two parts, it is not possible to assemble the two parts around the axle. The wheel must be slid over the end of the axle. This is a very time-consuming and demanding process, and will therefore impact the entire production plant for a considerable time. The lost production result in an economical loss.

From US 6,086,495 is a two part sprocket wheel known on which the preamble of the independent claim 1 is based, which sprocket wheel may be assembled about the drive axle. Parallel to the drive axle is provided, in a preferred embodiment, a dovetail connection, where the projection and recess making up the dovetail connection is arranged in parallel to the axle (when the sprocket wheel is installed in is installed in a conveyor structure). Means are provided either separately or integrated for keeping the two parts of the sprocket wheel together when arranged on the axle.

### Object of the invention

The present invention provides a solution concerning the problems mentioned above and elsewhere in the state of the art, while it makes it possible to assemble a sprocket wheel without use of neither tools, screws nor bolts.

### Description of an embodiment of the invention

This invention relates to a multi part sprocket wheel in particular for modular link belts according to claim 1. It should however be acknowledged that the sprocket wheel according to the invention may with corresponding effect be used in connection with other types of conveyor belts. The invention provides a multi part sprocket wheel where each part comprise a part of the wheels periphery including one or more sprockets and an interface section with means for interconnecting the said parts around a drive axle where the means for interconnecting the said parts are integrated in each part, such as when unifying the sprocket wheel parts it forms a uniform circular sprocket wheel.

According to the known technology of modular link belt assembly, there are problems when a sprocket wheel needs to be repaired or replaced, while it is often necessary to shut down the entire production, to be able to separate the modular link belt, to gain access the sprocket wheel. Furthermore the repairing is often very problematic, while one will need tools and screws or bolts to repair the sprocket wheel. The sprocket wheels are situated in narrow spaces in the modular link belts assembly's carrying structure, and therefore it is difficult to operate with the tools in the narrow space. It can be further complicated by the necessity to replace screws or bolts in the sprocket wheel.

In case a screw or bolt is dropped during the repair, the production is further delayed while it is necessary to relocate the screw or bolt, so it will not destroy the modular link belt assembly once running again, in case the screw prohibit the running of the belt, or makes the assembly run irregular. Also in a number of applications it is not acceptable should mechanical parts end up in the products conveyed on the conveyor.

Each sprocket wheel part has two interleaving flanges with reduced thickness, which comprise integral means for connecting the parts.

When the entire sprocket wheel is assembled, it has a substantially uniform circular shape and a substantially even thickness. The means for assembling the separate sprocket parts is continuous with the interleaving flanges of the sprocket wheel part, and therefore one can assemble the parts without use of screws or bolts.

The parts can be twisted around the drive axle and quickly be connected by simple manpower. There is no need for tools or bolts and screws.

This is an improvement compared to known technology, while this makes it faster and easier to assemble the sprocket wheel around the drive axle.

Thereby the modular link belt assembly is up and running much faster. In case the sprocket wheel needs repair or replacement, the repair is made much faster, as one is free of the troubles with using tools and screws and dismantling of the entire conveyor structure. This results in shorter production delay, which again gives an economic advantage.

The invention comprises a multi part sprocket wheel wherein the interleaving flanges has a radially extending groove and a tongue arranged parallel to said groove, such that two parts may be assembled by arranging the tongue of one part in the groove of the other part to be assemble with and vice verse, whereby the groove can have an undercut cross sectional shape, and the tongue will have corresponding cross sectional shape.

This will provide for a reinforced connection between two sprocket wheel parts, as not only the integral means for interconnection will hold the multi part sprocket wheel together, but the construction of the flanges, i.e. the tongue inter-fitting the groove on the parts will also provide an increased connection of the sprocket wheel parts.

Especially in a preferred construction of the flanges wherein the groove has a undercut cross sectional shape, and the tongue has a corresponding cross sectional shape, will the connection of the flanges on the sprocket wheel parts be very strong.

In a further advantageous embodiment of the invention the means for interconnecting the sprocket wheel parts comprises one or more tabs, which tabs arranged on one part accommodate tightly into corresponding apertures in a part to be connected with.

The means for interconnecting the multi part sprocket wheel are tabs and apertures integrated on the interleaving flanges, where the tabs and apertures are made to correspond to each other. Therefore by simply superposing the tabs over the apertures and forcing the tabs through the apertures a quick, and stable snap-connection is achieved.

It is a simple and effective method of connecting two parts, and once the parts are connected, the means become one, forming the sprocket wheel, and it is very unlikely the means will be damaged or worn down when the sprocket wheel become part of the production machine.

In a still further advantageous embodiment of the invention the tabs have a distal end and a lower body part where the distal end can have the same or a lager cross section than the body part, where the body part has an extension in the direction of the distal end corresponding to the material thickness surrounding the aperture.

In a construction where the tabs has a larger cross section than the body end, then the tab and aperture will click together, and the sprocket wheel parts are even more unlikely to disconnect, while it will need extra force to separate the parts once clicked together. Disconnection will typically destroy the tabs' distal end.

The tabs can in a further advantageous embodiment further comprise a groove across the periphery in the distal end.

This will allow the tab to be squeezed when passing through an aperture with a slightly smaller entrance aperture than inside the aperture, whereby the tab can expand once inside or on the opposite side of the aperture to the tabs entrance. This will also make it more difficult for the tab and aperture to disconnect.

The tabs and apertures are in a further advantageous embodiment shaped in various ways and sizes selected among for example the following: round, oval, square, triangular, star, polygonal and many more.

The tabs and apertures can have various shapes and sizes, all shapes and sizes are possible as long as it does not affect the purpose of the tabs and apertures, as means for interconnecting the sprocket wheel parts.

A tab can be mated with an aperture of a different shape, as long as the tab can be accommodated in the aperture.

Furthermore the tabs or the apertures or both can have barbs or projections, which will make an even stronger connection between the means, and therefore the sprocket wheel parts will have a reinforced connection.

A multi part sprocket wheel is in a further advantageous embodiment of the invention assembled by combining by two or more parts which are identical, or by combining two or more parts which are mirror images.

It would be possible to assemble a multi part sprocket wheel, by using parts which are identical. An example could be a part in which the means for interconnecting provided on one parts' flanges solely are made of tabs, and the other parts' flanges solely comprise mating apertures.

Another example could be multi part sprocket wheel parts which have the same numbers of tabs and apertures on each interleaving flange. This will also allow one to assemble a sprocket wheel by mating identical parts.

The invention is also realised in an embodiment where the multi part sprocket wheel comprising one or more parts with interface sections only comprising tabs, and one or more parts with interface sections only comprising apertures.

This new sprocket wheel has a huge advantages compared to known technology, while it is possible to assemble the sprocket wheel, according the present invention, entirely without the use of tools and screws or bolts.

The multi part sprocket wheel has a central opening to accommodate the drive axle. The central opening is often square sized but other shapes could be applied. The square sized central opening has rounded corners to improve the strength of the sprocket wheel.

The sprocket wheel has an opening made to fit around the drive axle, the opening can have various shapes and sizes. The opening is surrounded by a thickening to improve the resistance of the sprocket wheel, by the wear from the drive axle.
Inside the opening there are several extending profiles which forms contact with the drive axle, and reduce the contact and operational pressure.

Surrounding the central opening is one, several or a continuous flange arranged perpendicular to the plane of the sprocket wheel. This serve as an improved strength of the sprocket wheel around the central opening which accommodate the drive axle, which is the place on the sprocket wheel which will experience pressure and will be worn-out.

The multipart sprocket wheel could also be made with a central opening surrounded by increased material thickness, to improve the strength of the sprocket wheel.

The multi part sprocket wheel has several sprocket teeth on the periphery rim of the sprocket wheel. These teeth will interact with the conveyor belt for example in the shape of a modular link belt. The sprocket teeth can have various sizes and shapes, made to correspond with the modular link belt.

The multi part sprocket wheel parts can be made solely or partly of plastic. The sprocket wheel could have a core of metal which is coated with plastic.

The multi part sprocket wheel can be shaped using various methods, most preferably it is shaped by injection moulding.

### Brief description of the drawings

Below is enclosed a description of preferred embodiments of the invention with reference to the drawings, wherein:
Figure 1 shows a plan view of a first embodiment of an assembled multi part sprocket wheel.
Figure 2 shows a section along the line II-II on Figure 1.
Figure 3 shows one part of the sprocket wheel in Figure 1.
Figure 4 shows a first embodiment of a tab on the part in Figure 3, a rectangular shaped tab formed as two prongs.
Figure 5 shows a cross-sectional view of the rectangular shaped tab assembled inside an rectangular shaped aperture as in Figures 1 and 2.
Figure 6 shows a cross-sectional view corresponding to Figure 2 of a second embodiment of an assembled multi part sprocket wheel.
Figure 7 shows a cross-sectional view of the tab assembly according to the embodiment in Figure 6.
Figures 8 and 9 show in detail and in perspective view an aperture and a tab, respectively, according to the second embodiment in Figures 6 and 7.

### Description of the example embodiments

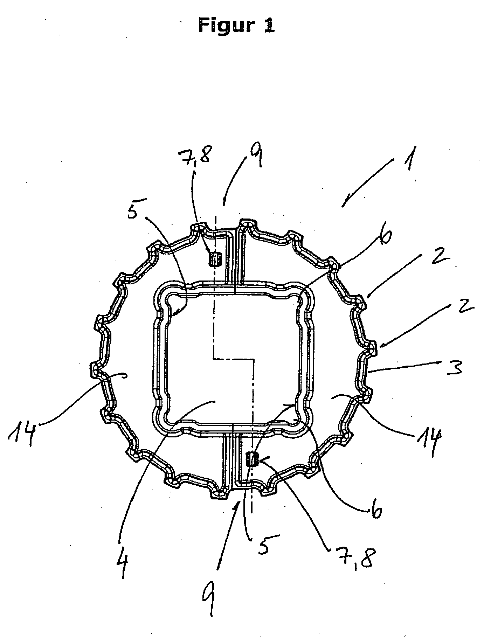

Figure 1 shows a front profile view of an assembled multi part sprocket wheel. In this case the sprocket wheel is a two part sprocket wheel.

The sprocket wheel 1 is preferably made of plastic which is most suitable in industries handling food or chemical compounds. The sprocket wheel has several sprocket teeth 2 on the outer periphery rim 3. The sprocket teeth make contact with the modular link belt assembly, driving the belt forward. The sprocket wheel is driven by a drive axle which passes through the opening 4 of the sprocket wheel. This opening 4 is preferably square shaped. Within the opening 4 there are several extending profiles 5 which forms contact surfaces with the drive axle. The opening 4 is shaped with rounded corners 6 which reduce operational pressure, and thereby prevent cracks in the sprocket wheel and thereby prolong the lifetime of the sprocket wheel.

Each sprocket wheel part 14 has two interface sections 9 of reduced thickness with means 7, 8 for connecting the multi part sprocket wheel. These means on interface sections are tabs 7 and apertures 8 made to accommodate exactly into each other, and thereby locking the sprocket wheel parts together without any use of tools or screws of bolts.

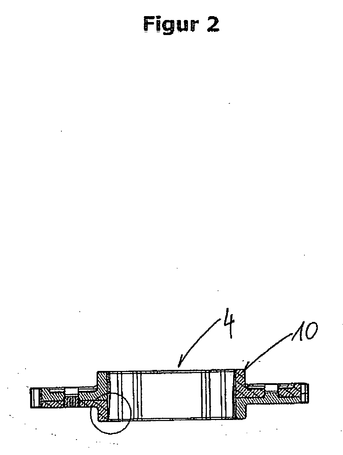

Figure 2 shows that when the entire sprocket wheel is assembled, it has a uniform circular shape and even thickness, with enlarged thickness around the square sized opening 4, due to the flanges 10, which will improve the strength of the multi part sprocket wheel.

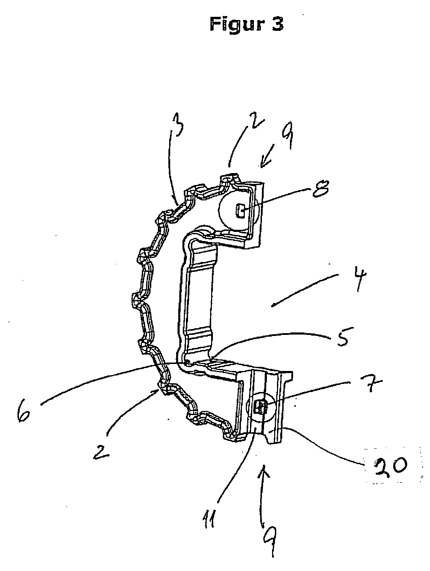

Figure 3 shows an example of a single sprocket wheel part, in this case a semicircular part. It has several sprocket teeth 2 on the periphery rim 3 of the sprocket wheel. The opening for the drive axle 4 has several small extending profiles 5 and rounded corners 6. The figure shows more clearly two interface sections 9 of reduced thickness with integrated means 7, 8 for connecting the multi part sprocket wheel. Each interface section 9 can have one or several means 7, 8 for connecting the separate sprocket wheel parts. The means in this embodiment are a kind of tab 7 and an aperture 8 forming mating parts such that the tab 7 is received with a tight fit into the aperture 8. The means for connecting the sprocket wheel are positioned at the middle of a groove 11 in the interface sections.

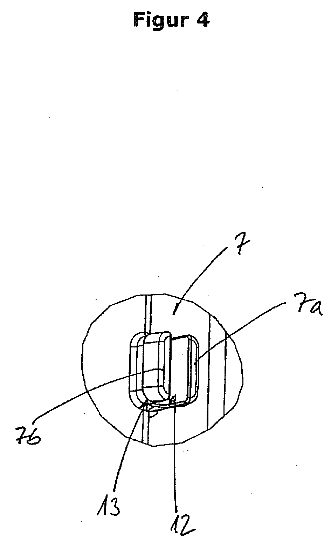

The tab 7 in the first embodiment shown in Figure 4 is shaped as a rectangular tab 7 with a cut-out 12 in the middle, thereby forming two flexible prongs 7a,7b with barbs 13 for providing a retaining engagement between tab 7 and aperture 8.

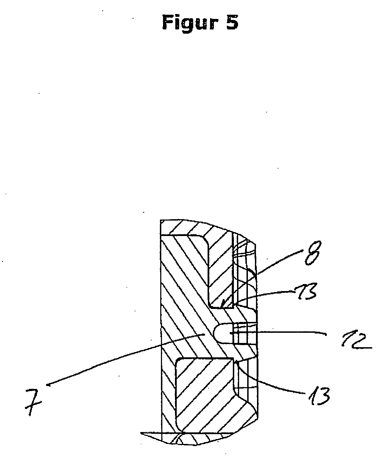

Figure 5 shows the first embodiment of the invention with a rectangular shaped tab 7 with a cut-out 12 assembled inside a rectangular shaped aperture 8.

The cross-sectional view in figure 5 shows in detail the engagement between tab 7 and aperture 8, wherein the tab fits into an aperture slightly smaller then the tab, as the cut-out 12 allows the tab's distal end to be compressed. Once inside the aperture 8, the tab can expand and barbs 13 will reinforce and secure the connection between the tabs 7 and apertures 8. This connection between tab 7 and aperture 8 is, however, designed so that the two parts 14 can be separated again for replacement, service etc.

The tabs and apertures can be shaped in other forms and sizes within the scope of the invention; round, oval, square, rectangular, compact or split, with or without grooves ect. One such alternative embodiment is described below.

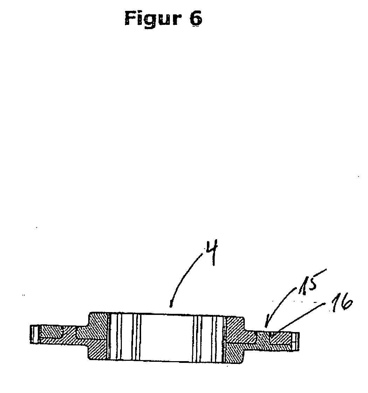

Figures 6-9 show an alternative embodiment of the multi part sprocket wheel according to the invention. This embodiment has solid, substantially round shaped tabs 15 assembled inside round shaped apertures 16.

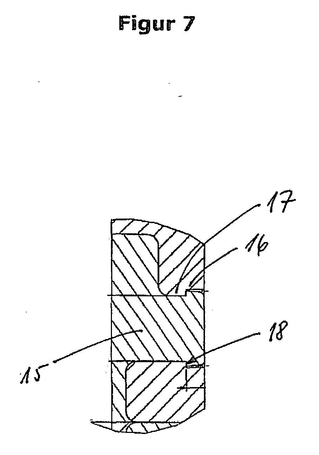

Figure 7 shows in detail a round shaped tab 15 engaging a circular aperture 16. The aperture 16 is provided with a step 17, and the tab 15 is provided with barb or barbs 18 for engaging the step 17.

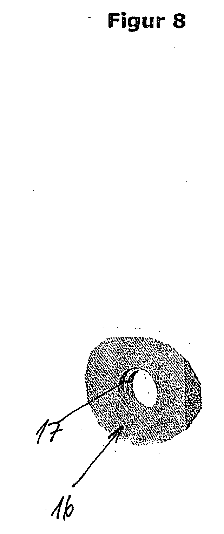

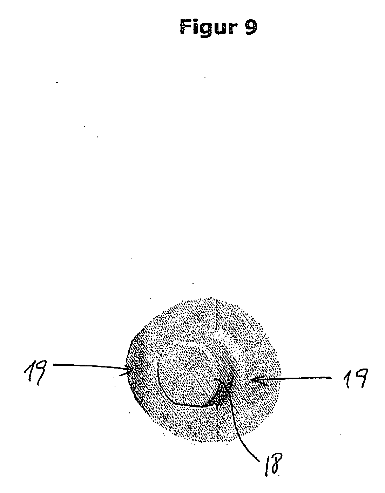

Figure 8 shows a detailed view of the aperture 16, more clearly showing the circular configuration of the aperture and the step 17 for reinforcing the connection between the tab 15 and the aperture 16. It is preferred in this embodiment that the tab 15 is provided without barbs 18 at opposite sides 19. Thereby the tab 15 will appear with approximately oval shape as seen from above, cf. Figure 9. When pressing the tab 15 through the aperture 16, the aperture 16 and the tab 15 will yield slightly, conforming resiliently to each other. After the barbs 18 have passed the step 17, the aperture 16 will return to its original shape and the barbs 18 will engage the step 17 for retaining engagement between the parts 15, 16 and thus the assembly of the parts 14.

Although a few examples of apertures, tabs etc are mentioned this must not be considered as limiting the scope of protection with respect to the selection of shapes, as a skilled person will recognise suitable shapes according to circumstances, manufacturing method etc. The scope of protection shall only be limited according to the appended claims.

The tabs can be connected with apertures of corresponding shape, or the tabs and apertures can be mated with means of different shapes, all shapes which are able to mate can be used, as long as the shapes makes it possible for the tabs and apertures to connect and be firmly assembled. As an example it could be possible to connect a star shaped tab with a round shaped aperture and vice versa.

## Claims

1. A multi part sprocket wheel (1) where each part (14) comprise a part of the wheels periphery (3) including one or more sprockets (2) and an interface section (9) with means (7,8,11,20) for interconnecting the said parts (14) around a drive axle where the means (7,8,11,20) for interconnecting the said parts (14) are integrated in each part **characterised in that** the interface section (9) has a radially extending groove (11) and a tongue (20) arranged parallel to said groove (11), such that two parts (14) may be assembled by arranging the tongue (20) of one part in the groove (11) of the other part to be assembled with, and vice versa, and **in that** the groove (11) is undercut and the tongue (20) has a corresponding cross sectional shape.

2. A multi part sprocket wheel according to claim 1 **characterized in that** the means for interconnecting the sprocket wheel parts further comprises one or more tabs (7), which tabs (7) arranged on one part tightly fits into corresponding apertures (8) in a part to be connected with.

3. A multi part sprocket wheel according to claim 2 **characterized in that** the tabs (7) have a distal end and a lower body part where the distal end has a lager cross section than the body part, where the body part has an extension in the direction of the distal end corresponding to the material thickness surrounding the aperture (8).

4. A multi part sprocket wheel according to claim 2 wherein the tab (7) in the distal end has a cut-out (12) across the periphery.

5. A multi part sprocket wheel according to claim 2 wherein the means for interconnecting the separate sprocket wheel parts (7,8) has a cross sectional shape of mating tabs (7) and apertures (8) selected among the following: circular, oval, square, star, triangular, polygonal.

6. A multi part sprocket wheel according to claim 2 wherein the means (7,8) for interconnecting the separate sprocket wheel parts (14) comprise one or more barbs/projections (13).

7. A multi part sprocket wheel according to any of the preceding claims, **characterized in that** each part (14) is identical.

8. A multi part sprocket wheel according to any of claims 1-6, **characterized in that** two or more parts (14) are non-identical/mirror images.

9. A multi part sprocket wheel according to any of claims 1 to 6, **characterized in that** one (or more) part (17) have interface sections (9) only comprising tabs (7), and one (or more) part (14) has interface sections (9) only comprising apertures(8).

## Patentansprüche

1. Mehrteiliges Kettenrad (1) wobei jeder Teil (14) einen Teil des Radkreisumfangs (3) umfasst, einschliessend einen oder mehrere Zähne (2) und eine Grenzflächensektion (9) mit Mittel (7,8,11,20) zum Verbinden der genannten Teile (14) um eine Antriebsachse wobei die Mittel (7, 8, 11, 20) zum Verbinden der genannten Teile (14) in jeden Teil integriert sind, **dadurch gekennzeichnet dass** die Grenzflächensektion (9) eine radial verlaufende Nut (11) und eine zu der genannten Nut (11) parallel angeordnete Feder (20) aufweist, so dass zwei Teile (14) durch Anordnung der Feder (20) des eines Teils in die Not (11) des zusammenzufügenden anderen Teils zusammengesetzt werden können, und umgekehrt, und dass die Nut Unterschnitt aufweist und die Feder (20) eine entsprechende Querschnittsform aufweist.

2. Mehrteiliges Kettenrad nach Anspruch 1, **dadurch gekennzeichnet dass** die Mittel zum Verbinden der Kettenradteile ausserdem einen oder mehrere Zapfen umfassen, welche auf einen Teil angeordnete Zapfen dicht in den entsprechenden Öffnungen in einem zusammenzufügenden Teil einpassen.

3. Mehrteiliges Kettenrad nach Anspruch 2, **dadurch gekennzeichnet dass** die Zapfen (7) ein distales Ende und einen unteren Körperteil aufweisen wobei das distale Ende einen grösseren Querschnitt als den Körperteil aufweist, wobei das Körperteil eine Verlängerung in der Richtung des distalen Endes entsprechend der Materialdicke um die Öffnung herum (8) aufweist.

4. Mehrteiliges Kettenrad nach Anspruch 2, wobei der Zapfen (7) in dem distalen Ende eine Aussparung (12) durch die Peripherie aufweist.

5. Mehrteiliges Kettenrad nach Anspruch 2, wobei die Mittel zum Verbinden der getrennten Kettenradteile (7, 8) eine Querschnittsform der zueinander passenden Zapfen (7) und Öffnungen (8) aufweisen, unter dem folgenden ausgewählt: zirkulär, oval, viereckig, dreieckig, polygonal.

6. Mehrteiliges Kettenrad nach Anspruch 2, wobei die Mittel (7, 8) zum Verbinden der getrennten Kettenradteile (14) einen oder mehrere Widerhaken/Projektionen (13) umfassen.

7. Mehrteiliges Kettenrad nach irgendeinem der vorhergehenden Ansprüche, **dadurch gekennzeichnet dass** jeder Teil (14) identisch ist.

8. Mehrteiliges Kettenrad nach irgendeinem der Ansprüche 1-6, **dadurch gekennzeichnet dass** zwei oder mehrere Teile (14) nicht identisch/Spiegelbilder sind.

9. Mehrteiliges Kettenrad nach irgendeinem der Ansprüche 1 bis 6, **dadurch gekennzeichnet dass** ein (oder mehrere) Teil (Teile) (17) nur Zapfen (7) umfassende Grenzflächensektionen (9) aufweisen, und ein (oder mehrere) Teil (Teile) (14) nur Öffnung umfassende Grenzflächensektionen (9) aufweisen.

## Revendications

1. Roue de pignon à pièces multiples (1) dans laquelle chaque partie (14) comprend une partie de la périphérie des roues (3) comprenant une ou plusieurs dents de pignon (2) et une section d'interface (9) avec des moyens (7,8,11,20) pour interconnecter lesdites parties (14) autour d'un axe d'entraînement, où les moyens (7,8,11,20) pour interconnecter lesdites parties (14) sont intégrés dans chaque partie, **caractérisée en ce que** la section d'interface (9) a une rainure (11) s'étendant radialement et une languette (20) agencée de manière parallèle à ladite rainure (11), de telle sorte que deux parties (14) puissent être assemblées en disposant la languette (20) d'une partie dans la rainure (11) de l'autre partie avec laquelle elle va être assemblée, et vice versa, et **en ce que** la rainure (11) est en contre-dépouille et la languette (20) a une forme en coupe transversale correspondante.

2. Roue de pignon à pièces multiples selon la revendication 1, **caractérisée en ce que** le moyen pour interconnecter les parties de roue de pignon comprend en outre un ou plusieurs doigts (7), lesdits doigts (7) agencés sur une partie s'emboîtent étroitement dans des ouvertures correspondantes (8) dans une partie à laquelle ils devront être connectés.

3. Roue de pignon à pièces multiples selon la revendication 2, **caractérisée en ce que** les doigts (7) ont une extrémité distale et une partie inférieure où l'extrémité distale a une section transversale plus grande que la partie de corps, où la partie de corps a une extension dans la direction de l'extrémité distale correspondant à l'épaisseur du matériau entourant l'ouverture (8).

4. Roue de pignon à pièces multiples selon la revendication 2, dans lequel le doigt (7) dans l'extrémité distale a une découpe (12) à travers la périphérie.

5. Roue de pignon à pièces multiples selon la revendication 2, dans lequel le moyen pour interconnecter les parties de roue de pignon séparées (7,8) a une forme en coupe transversale des doigts (7) et des ouvertures (8) d'accouplement choisie parmi les suivants : circulaire, ovale, carré, en étoile, triangulaire, polygonale.

6. Roue de pignon à pièces multiples selon la revendication 2, dans laquelle les moyens (7,8) pour interconnecter les différentes parties de roue dentée (14) comprennent un ou plusieurs ergots/saillies (13).

7. Roue de pignon à pièces multiples selon l'une quelconque des revendications précédentes, **caractérisée en ce que** chaque partie (14) est identique.

8. Roue de pignon à pièces multiples selon l'une quelconque des revendications 1 - 6, **caractérisée en ce que** deux ou plusieurs parties (14) ne sont pas identiques/images miroirs.

9. Roue de pignon à pièces multiples selon l'une quelconque des revendications 1 à 6, **caractérisée en ce que** une (ou plusieurs) partie (17) a (ont) des sections d'interface (9) comprenant uniquement des doigts (7), et une (ou plusieurs) partie (14) a (ont) des sections d'interface uniquement (9) comprenant des ouvertures (8).
